Europäisches Patentamt

European Patent Office

Office européen des brevets

(11) Publication number: **0 063 495**
**B1**

⑱
(12)

# EUROPEAN PATENT SPECIFICATION

(45) Date of publication of patent specification: **07.08.85**

(21) Application number: **82302034.2**

(22) Date of filing: **21.04.82**

(51) Int. Cl.⁴: **A 01 G 9/08,** B 65 B 43/42

(54) Apparatus for filling multi-compartment seed trays.

(30) Priority: **22.04.81 GB 8112482**
**16.09.81 GB 8127936**

(43) Date of publication of application:
**27.10.82 Bulletin 82/43**

(45) Publication of the grant of the patent:
**07.08.85 Bulletin 85/32**

(84) Designated Contracting States:
**AT BE CH DE FR GB IT LI LU NL SE**

(56) References cited:
**AU-D-4 736 172**
**DE-A-1 923 141**
**US-A-4 020 881**

(73) Proprietor: **Chamberlain, Richard Anthony**
**Hill Side Vinegar Hill**
**Sandy, Bedfordshire SG19 1PR (GB)**

(72) Inventor: **Chamberlain, Richard Anthony**
**Hill Side Vinegar Hill**
**Sandy, Bedfordshire SG19 1PR (GB)**

(74) Representative: **Maguire, Peter Albert**
**Furtherwick House 14/16 Fen End**
**Over, Cambridge CB4 5NE (GB)**

Courier Press, Leamington Spa, England.

## Description

The invention relates to apparatus for filling multi-compartment seed trays with a growing medium such as peat and for automatically seeding the trays.

It is known to provide seed trays which comprise a large number of individual compartments each of which is adapted to grow one seed. Such compartmented seed trays are desirable in comparison with conventional open seed trays in that far less growing medium is required and that the seeds are separated one from the other. It is however, a time consuming operation to fill the seed trays with growing medium by hand and then to plant an individual seed in each compartment of the tray by hand. It is an object of the invention to provide apparatus by means of which this process can be speeded up.

It is known from US—A—4020881 to provide apparatus for filling multi-compartment seed trays with a growing medium, for removing the surplus growing medium and for consolidating the growing medium in each compartment so that the compartments are ready to receive young plants.

One particular problem which was encountered in devising suitable automatic apparatus for filling and seeding compartmented seed trays was that the trays needed to be moved incrementally through the apparatus by an amount precisely equivalent to the length of one seed compartment of the tray so that the various operations of filling the compartment with growing medium, removing surplus medium, tamping down or consolidating the growing medium, forming a depression in the surface of the growing medium, seeding the growing medium and so on could be performed in precise registration with the individual compartments of the seed tray. In particular there was needed an indexing mechanism for moving the seed trays through a variable distance dependent on the wall thickness problem being particularly acute every time the indexing mechanism encounters a new tray due to the double wall thickness at the junction.

This problem is overcome by providing indexing means arranged for engaging a leading wall (considered in the direction of travel of the seed tray) of each successive compartment of the seed tray whereby the tray can be indexed forwardly. To cope with differences in the wall thickness between the various compartments of the seed tray, and more particularly the double wall thickness encountered when changing from one tray to the next the indexing means is reciprocated to-and-fro through a distance greater than the actual increment through which the tray must be moved. The indexing means may comprise one or more (preferably several) pivoted fingers, the arrangement being such that they can pivot through 90° from a vertical position to a horizontal position, stop means being provided to limit the pivoting movement. In this arrangement, the working position of the fingers in which they engage the interior surface of the seed tray compartments to move the tray is vertical, and at the end of the indexing stroke, the fingers move rearwardly until they encounter the rear wall of the seed compartment, at which stage they pivot upwardly into a horizontal position to clear the rear wall. Following further rearward movement of the fingers they drop under gravity into the next following seed compartment, thus returning to the vertical position ready for the next forward indexing movement. If desired the fingers may be urged into a rest position by resilient means.

Another problem which has been encountered is that particularly where the individual compartments in the tray are small and where the particle size of the material for filling the compartments, e.g. peat, is relatively large it is difficult to ensure that the compartments are properly filled and that no voids are left in the compartments such as would, for example, hinder the growth of seedlings. It is an object of the invention to provide means for ensuring that the compartments are properly filled.

From this aspect the invention provides means for enhancing the filling of trays with particulate material especially the filling with growing medium such as peat of seed trays formed with small compartments, comprising a member movable to and fro preferably in the direction of movement of the trays above and closely adjacent to the top of the tray, the member being disposed in the station of the apparatus in which the trays are filled with particulate material. The member is preferably blade-like and is preferably connected to the indexing means so as to move therewith. Preferably the blade is inclined to the vertical so that its motion to and fro forces the particulate material downwardly. Preferably a fixed scraper blade is also provided, the fixed blade being arranged above the seed tray downstream of the movable member so that motion of the tray causes surplus particulate material to be removed. To this end the fixed blade is preferably inclined to move the material transversely to the path of movement of the seed trays.

The invention is diagrammatically illustrated by way of example in the accompanying drawings in which:

Figure 1 is a perspective view of apparatus for automatically filling multi-compartment seed trays with growing medium and for seeding the trays;

Figure 2 is a perspective view of one part of the apparatus of Fig. 1;

Figure 3 is a perspective view of another part of the apparatus of Fig. 1;

Figure 4 is a perspective view of a further part of the apparatus of Fig. 1;

Figure 5 is a perspective view generally similar to that of Fig. 3 of another embodiment; and

Figure 6 is a perspective view of the modified apparatus of Fig. 5, but taken from the other side.

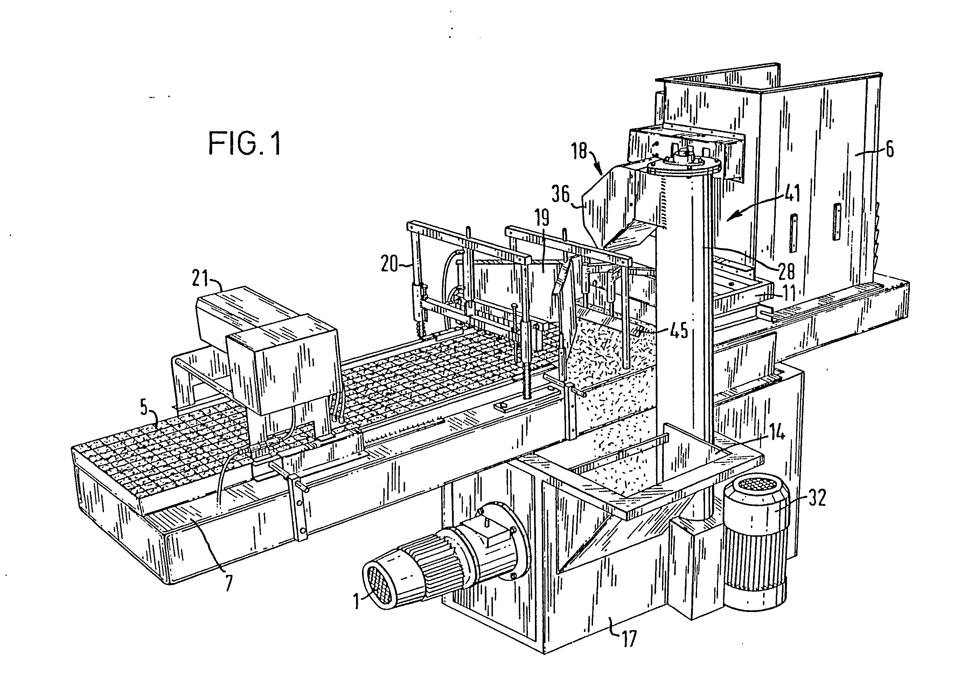

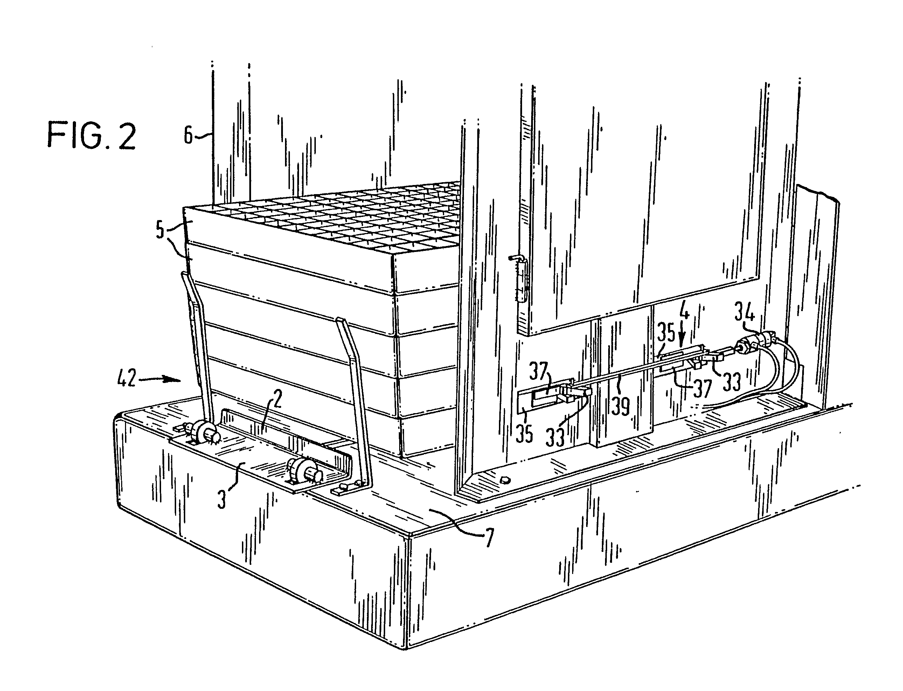

In the drawings, referring more particularly to Figs. 1 to 4, apparatus of the kind aforesaid comprises an elongated base plate 7 along which multi-compartment seed trays generally indicated at 5 are fed from a stack of such seed trays in a container 6. The seed trays are removed from the bottom of the stack successively by means of a mechanism generally indicated at 42 (Fig. 2), which is located at the bottom of the stack, and are then received by an indexing mechanism generally indicated at 41 by means of which the trays are indexed forwards one compartment at a time so that they can be filled with peat or other growing medium by means of a filler generally indicated at 18, the peat then being tamped down in the compartments by means of a mechanism generally indicated at 20 after which a seed is precisely located in each compartment by means of a seeding mechanism, which may be of a kind known *per se*, generally illustrated at 21.

Referring to the drawings in more detail, the trays 5 are removed from the container 6 by means of a wheeled carriage 3 which is formed with an upstanding flange 2 which engages the rear of the lowermost tray in the stack and pushes it to the right as seen in Figure 2 wherein it is engaged by means of the indexing mechanism 41. The carriage 3 is reciprocated by means of a pneumatic ram (not shown) located under the base of plate 7. As can be seen in Figure 2 of the drawings a tray clamping mechanism 4 is associated with the container 6 and is arranged to engage the seed tray immediately above the bottom tray in the stack to prevent accidental displacement of the stack during operation of the carriage 3. The clamping mechanism comprises a pneumatic ram 34 connected *via* a link 39 to a pair of cranked arms 33 which each carry a pad 37 which engages the stack of trays through windows 35 in the container 6. Thus, when the carriage 3 advances to push a tray 5 towards the indexing mechanism 41 the clamping mechanism operates so that the pads 37 engage the stack of trays to retain them in position suspended above the base plate 7 until the carriage is retracted into the position shown in Fig. 2.

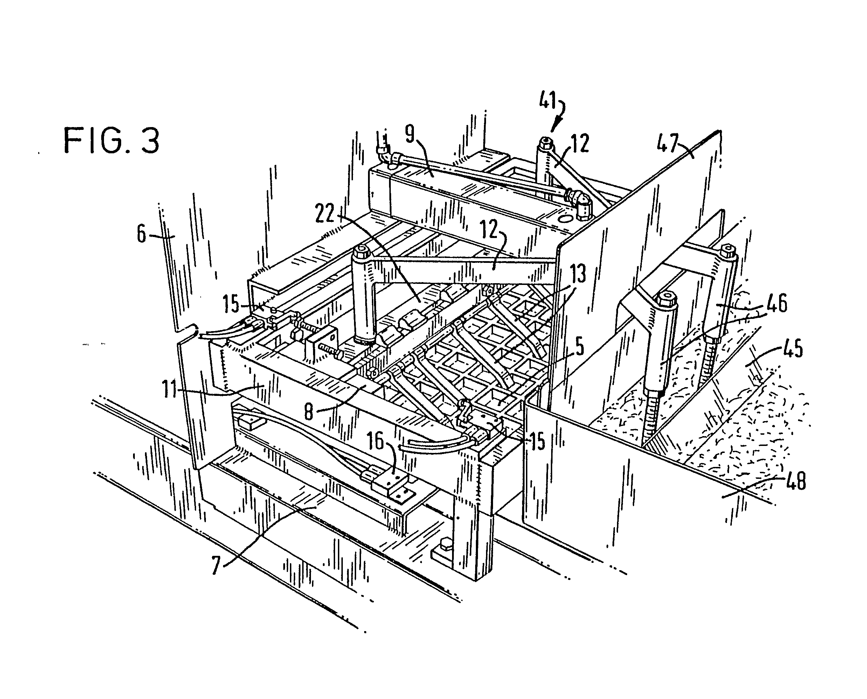

As best can be seen in Figure 3 of the drawings, the indexing mechanism 41 comprises a carriage 8 which can be reciprocated along the base plate 7 along tracks (not shown) on guide beams 11 by means of a pneumatic cylinder 9. The carriage 8 incorporates a transverse member 22 which is connected to the piston rod of the pneumatic cylinder by means of a pair of arms 12. The transverse member 22 carries a series of pivoted fingers 13 which are movable through approximately 90° between a substantially upright position and a substantially horizontal position, the movement of the fingers being limited by stop means. The reciprocation of the carriage 8 is controlled by means of contact switches 15 and a further contact switch 16 is provided on the base 7 to sense the rear end of a seed tray so as to actuate the mechanism 42 to advance a further seed tray towards the indexing mechanism 41.

The indexing mechanism 41 operates by the fingers 13 engaging inside a compartment of a seed tray whereupon on movement of the carriage to the right as shown in Fig. 3 the seed tray is advanced by a distance precisely equivalent to the length of each seed compartment. When the carriage is retracted in a direction to the left as shown in Fig. 3, the fingers encounter the rear walls of the compartments, whereupon after further retraction of the carriage they pivot into the horizontal position until they fall by gravity into the following seed compartment of the tray. Thereupon, the carriage may be indexed forwardly so that the tray is advanced again by a distance precisely equivalent to the length of the seed compartment. The fingers 13 thus cooperate with the compartments of the seed tray in the manner of a ratchet and pawl. The advantage of this indexing mechanism is that it will advance the seed trays by precisely the right distance at every indexing step irrespective of variations in the thickness of the walls between adjacent compartments of the tray and irrespective of the fact that the distance between the rear most compartment of one seed tray and the forward compartment of the following tray is greater on account of the double wall thickness.

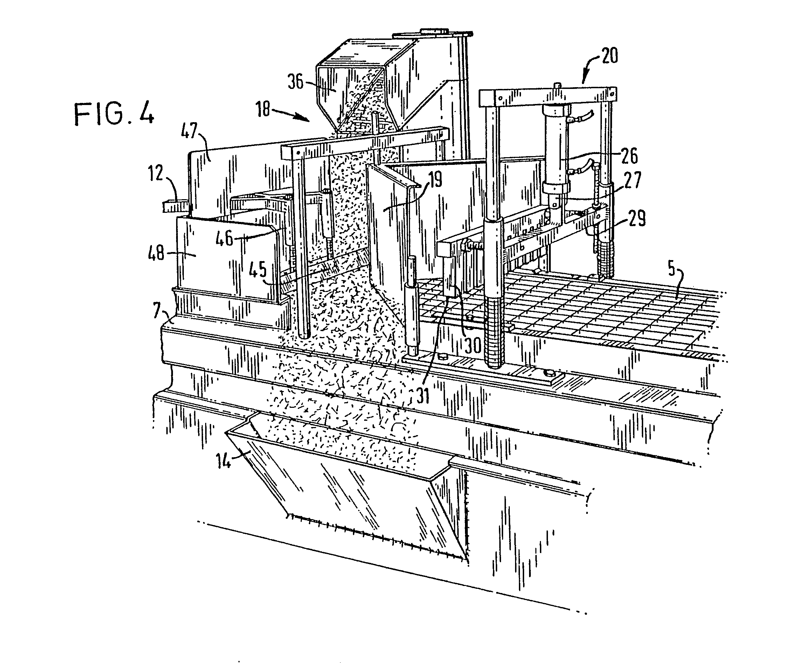

The seed trays are then filled with peat or other growing medium by means of a mechanism 18 (Fig. 4) which preferably comprises a mixer of the kind described in my U.K. Patent Application No. 8138265 of 18th December 1981, surplus peat being removed from the trays by means of a plough-like scraper blade 19 which is disposed above the trays 5. Peat or other growing medium is mixed in a container 17 driven by an electric motor 1, the mixer preferably being of the kind described in my U.K. Patent Application No. 8138265 and the growing medium is conveyed from the mixer 17 *via* a conveyor 28 driven by an electric motor 32 and is discharged onto the trays 5 through a chute 36 in an area defined by a transverse wall 47, a pair of longitudinal walls 48 and the scraper blade 19. An inclined scraper blade 45 is disposed in the said area with its lower edge immediately above or in contact with the tops of the trays 5 and is arranged to be moved to and fro, in the direction of movement of the trays along the base plate, in order to agitate the peat and to ensure proper filling of the compartments of the trays. The fact that the blade is inclined assists in forcing peat into the compartments. The blade 45 is connected by means of vertical rods 46 to the piston rod of the pneumatic ram 9 of the indexing mechanism 41 so that it operates in synchronism with the indexing mechanism. Surplus growing medium falls from the sides of the base plate 7 through gaps defined by the ends of the longitudinal walls 48 and the scraper blade 19 and is collected in hoppers 14 and returned to the mixing mechanism from which it is again supplied to the trays 5 by the conveyor 28.

The peat in each compartment of the trays 5 is then tamped down in the compartments by means of a tamping mechanism 20 comprising a vertically reciprocating bar 29 connected to a pneumatic ram 26 by means of its piston rod 27, the bar carrying a series of downwardly projecting members 30 of square cross-section which fit the compartments of the seed tray, the under surfaces of the square shaped members 30 being formed with projecting domes 31 which form corresponding dished recesses in the surface of the peat or other growing medium in the trays 5 so as better to locate the seeds. It will be appreciated that the operation of the tamping mechanism 20 is synchronised with that of the indexing mechanism 41.

The seed trays are then fed to a seeder 21 (Fig. 1) preferably of a kind known *per se* which locates a seed in each dished recess in the seed compartments of the trays.

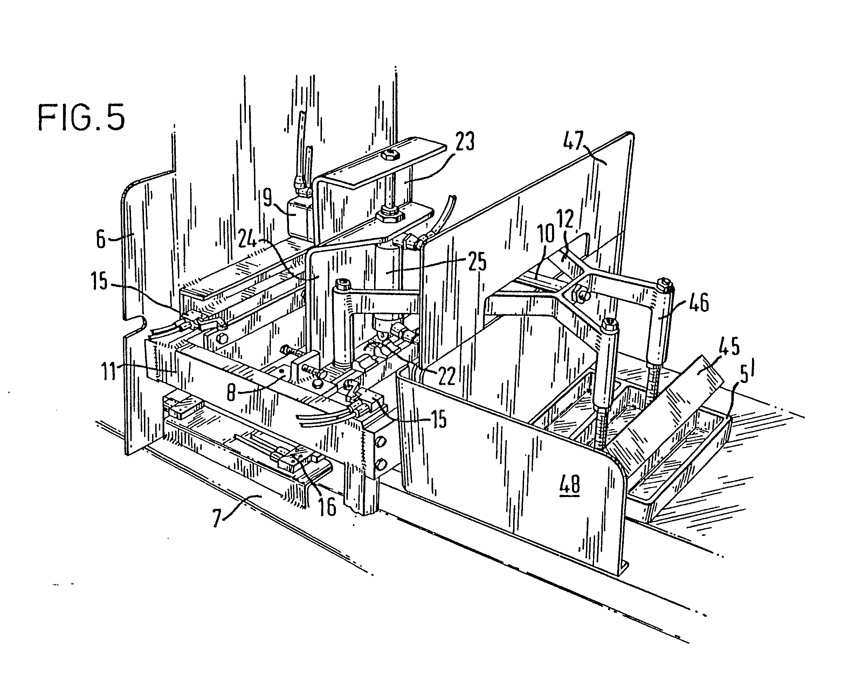

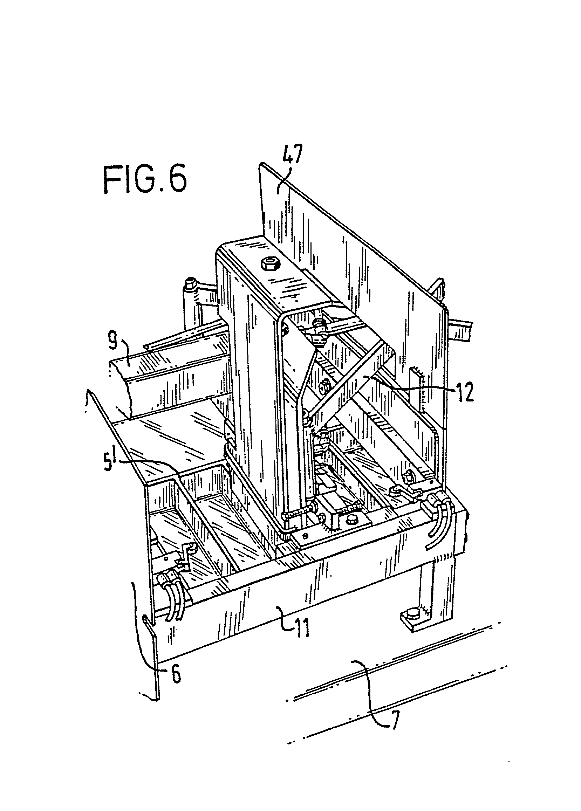

In Figures 5 and 6 of the drawings there is shown a modified form of indexing mechanism for use with seed trays comprising a plurality of elongated compartments. Where the walls of the compartments are elongated, they tend to be of low strength so that an indexing mechanism comprising a plurality of fingers for engaging the walls of the compartments might tend to break the walls. In this embodiment the indexing mechanism comprises a support 24 mounted on the transverse member 22 of the carriage 8 for reciprocation therewith under the action of pneumatic cylinder 9, the piston rod 10 which can be seen in Fig. 5. A vertically movable plate 23 is mounted on the support 24 and is moved vertically by means of a pneumatic ram 25 which is connected between the plate 23 and the support 24. The lower end of the plate 23 is arranged, when in its lowered position, to engage in one of the compartments of the seed tray 5 so that when the carriage 8 is moved forwards the tray is indexed forwards. The plate 23 is, of course, raised before the carriage 8 is moved backwards. The plate 23 spreads the load over a comparatively large area of the seed tray so minimising risk of damaging the seed tray.

**Claims**

1. Apparatus for filling multi-compartment seed trays with a growing medium comprising means (41) for indexing the seed trays (5) through the apparatus one compartment at a time so that the compartments can be successfully filled with growing medium, surplus growing material removed, the growing medium in each compartment consolidated, and seeds placed in the growing medium, characterised by the indexing mechanism (41) having means (13, 23) placed above the seed tray (5) to be advanced and for engaging by contact the interior surface of the forward wall of a compartment of the seed tray (5), considered in the direction of motion of the trays through the apparatus, the means (13, 23) being movable to index the tray (5) forwards through an amount equal to the length of one compartment, the indexing mechanism (41) being reciprocable through a distance greater than an amount equal to the length of one compartment, but less than two lengths, the means (13, 23) for engaging the wall being able to move up during the rearward motion of the indexing mechanism.

2. Apparatus according to claim 1, characterised in that the indexing means (41) comprises one or more pivoted fingers (13), the arrangement being such that the fingers (13) can pivot during the rearward motion through 90° from a vertical position to a horizontal position, stop means being provided to limit the pivoting movement.

3. Apparatus according to claim 1 or claim 2, characterised by a scraper member (45) connected to the indexing mechanism (41) so as to be movable to and fro therewith closely adjacent to the top of the tray (5), the scraper member (45) being disposed in the station (18) of the apparatus in which the trays (5) are filled with particulate material.

4. Apparatus according to claim 3, characterised in that the member (45) is a blade which is inclined to the vertical so that its motion to and fro forces the particulate material downwardly.

5. Apparatus according to claim 3 or claim 4, characterised by a fixed scraper (19) arranged above the path of the seed tray downstream of the movable member (45) so that motion of the tray causes surplus particulate material to be removed.

6. Apparatus according to claim 5, characterised in that the fixed scraper (19) is wedge-like to move surplus material transversely to the path of movement of the seed trays.

**Revendications**

1. Appareil à remplir des terrines à semis à cases multiples d'un agent de culture comprenant un dispositif (41) pour avancer le terrines (5) dans cet appareil une case à la fois de façon à bien remplir les cases de l'agent de culture, d'en enlever le surplus, de consolider l'agent de culture dans chaque case et d'y planter les semences, caractérisé par le fait que le dispositif d'avance (41) a des moyens (13, 23) placés au-dessus de la terrine (5) à être avancée, ce qui agit sur la surface interne de la paroi avant d'une case de la terrine (5) dans le sens où passent les terrines dans l'appareil, les moyens (13, 23) étant mobiles pour avancer la terrine (5) d'une distance égale à la longueur d'une case, le dispositif d'avance (41) pouvant marcher en sens inverse d'une distance supérieure à la longueur d'une case mais inférieure à deux longueurs, les moyens (13, 23) qui agissent sur la paroi pouvant se relever pendant le mouvement en arrière du dispositif d'avance.

2. Appareil selon la revendication 1, caractérisé par le fait que le dispositif d'avance (41) comprend un ou plusieurs doigts articulés (13) de façon que les doigts (13) puissent pivoter au cours du mouvement en arrière de 90° de verticalement à horizontalement, des butées étant prévues pour limiter le pivotage.

3. Appareil selon la revendication 1 ou 2, caractérisé par une ratissette (45) reliée au dispositif d'avance (41) de façon à aller et venir en rasant le haut de la terrine à semis (5), cette ratissette (45) étant placée au poste (18) de l'appareil auquel les terrines (5) sont remplies de matériel particulaire.

4. Appareil selon revendication 3, caractérisé par le fait que cet élément (45) est une lame inclinée par rapport à la verticale de façon à ce que ses mouvements d'allée et venue poussent le matériel particulaire vers le bas.

5. Appareil selon revendication 3 ou 4, caractérisé par une ratissette fixe (19) située au-dessus du chemin de la terrine de semis en aval de l'élément mobile (45) de façon que le mouvement de la terrine enlève tout surplus de matériel particulaire.

6. Appareil selon revendication 5, caractérisé par le fait que la ratissette fixe (19) est en forme de coin de façon à enlever le surplus de matériel transversalement par rapport au sens du mouvement des terrines.

### Patantansprüche

1. Gerät für das Füllen von in mehrere Abteile unterteilten Saatkästen mit Krume, mit Mitteln (41) für den schrittweisen Vorschub der Saatkästen (5), so daß die Abteile erfolgreich mit Krume gefüllt werden können, wobei überschüssiges Material entfernt und die Krume in jedem Abteil konsolidiert wird, und Samen in das Medium eingesät werden, dadurch gekennzeichnet, daß die Schrittvorschubmechanik (41) für die Saatkästen Vorrichtungen (13, 23) über dem Saatkasten (5) für den Vorschub des Saatkästens und den kraftschlüssigen Kontakt mit der Innenfläche einer in Vorwärtsrichtung des Saatkastens (5) liegenden Saatkasten-Trennwand aufweist, wobei diese Vorrichtungen (13, 23) für den schrittweisen Vorschub des Saatkastens (5) durch das Gerät um je eine Saatkastenabschnittlänge beweglich ausgebildet sind, die Vorschubmechanik (41) um eine größere Strecke als die Länge eines Saatkastenabschnitts aber um weniger als zwei solche Abschnitte zurückziehbar ist und die Vorrichtungen (13, 23) für die Herstellung des Eingriffes mit der Saatkastentrennwand so ausgebildet sind, daß sie während der Rückziehbewegung gehoben werden.

2. Gerät gemäß Anspruch 1, dadurch gekennzeichnet, daß die Vorschubmechanik (41) aus einem oder mehreren schwenkbar ausgeführten Fingern (13) besteht, die so angeordnet sind, daß die Finger (13) während der Rückziehbewegung um 90° aus der lotrechten Lage in eine waagerechte Lage verstellt werden können, wobei Endanschlagsmittel für die Begrenzung der Schwenkbewegung vorgesehen sind.

3. Gerät gemäß Anspruch 1 oder 2, gekennzeichnet, durch ein Abstreifglied (45), das so an die Vorschubmechanik (41) angelenkt ist, daß es sich mit dieser in dichter Nähe der Oberkante des Saatkastens (5) hin- und herbewegen kann, wobei das Abstreifglied (45) in der Station (18) des Gerätes angeordnet ist, in der die Saatkästen (5) mit Krume gefüllt werden sollen.

4. Gerät gemäß Anspruch 3, dadurch gekennzeichnet, daß es sich bei dem Abstreifglied (45) um eine Klinge handelt, die schräg zur lotrechten verläuft, so daß die Krume bei der Hin- und Herbewegung nach unten gedrückt wird.

5. Gerät gemäß Anspruch 3 oder 4, gekennzeichnet durch einen feststehenden Abstreifer (19) über der Bahn des Saatkastens hinter dem beweglichen Abstreifglied (45) so angeordnet, daß durch die Bewegung des Saatkastens überschüssige Krume entfernt wird.

6. Gerät gemäß Anspruch 5, dadurch gekennzeichnet, daß der feststehende Abstreifer (19) keilförmig ausgebildet ist, so daß überschüssige Krume quer zur Bewegungsrichtung der Saatkästen abgestrichen wird.

FIG.1

FIG. 2

0 063 495

FIG. 3

FIG. 4

FIG.5

FIG.6